# EUROPEAN PATENT APPLICATION

(11) **EP 3 982 032 A1**
(43) Date of publication of application: **13.04.2022**
(21) Application number: 20200715.9
(22) Date of filing: 08.10.2020
(51) Int. Cl.: F17C 13/12

(54) **A HYDROGEN STORAGE SYSTEM INCLUDING A SAFETY DEVICE**

(71) Applicant: VOLVO TRUCK CORPORATION, 405 08 Göteborg (SE)
(72) Inventor: JUSTIN, Thomas, 69530 BRIGNAIS (FR)
(74) Representative: Germain Maureau

(57) **Abstract**

The hydrogen storage system (10) comprises:
- at least one compressed hydrogen tank (11);
- a supply line (13) for supplying hydrogen from said hydrogen tank (11) to an energy producing equipment (12);
- a safety device (20) comprising:
- a venting device (30) opening into the atmosphere;
- a venting line (22) connecting the hydrogen tank (11) to the venting device (30), the venting line (22) being equipped with a control valve (24) designed to be open in predetermined operating conditions to allow hydrogen to flow in the venting device (30) and to be released into the atmosphere;
- a water pipe (40) having an outlet equipped with an injector (41) which opens in the venting device (30), for conducting water to the venting device (30) and injecting it into the hydrogen flow (F1) in said venting device (30).

## Description

### TECHNICAL FIELD

The invention relates to a hydrogen storage system, in particular in vehicles.

The invention can be applied in light, medium and heavy-duty vehicles, such as trucks, buses and construction equipment.

### BACKGROUND

Vehicles that use hydrogen as fuel, at least in part, are interesting in that they allow reducing direct greenhouse gas emissions.

Such vehicles are equipped with a hydrogen-based energy production system that typically comprises a compressed hydrogen tank for supplying hydrogen to an energy producing equipment.

In case the hydrogen tank is exposed to high temperatures (typically in the case of an accidental fire), the pressure in the tank also increases. To prevent the tank from bursting in such a situation, there is provided a safety device including a venting line that carries hydrogen from the tank to a venting device, for releasing hydrogen into the atmosphere. Furthermore, the position and orientation of the venting device outlet are generally designed to prevent, as much as possible, the released hydrogen from fuelling the pre-existing fire.

However, as hydrogen is highly flammable, there remains a need for further improving safety of hydrogen storage arrangements, in particular in vehicles.

### SUMMARY

An object of the invention is to increase the safety of systems involving the storage of hydrogen, in particular in a compressed gaseous state.

An object of the invention is to reduce the flammability of hydrogen when it is released to the atmosphere in case of an accident.

For that purpose, the invention relates to a hydrogen storage system, comprising:
- at least one compressed hydrogen tank;
- a supply line for supplying hydrogen from said hydrogen tank to an energy producing equipment;
- a safety device comprising:
   - a venting device opening into the atmosphere;
   - a venting line connecting the hydrogen tank to the venting device, the venting line being equipped with a control valve designed to be open in predetermined operating conditions to allow hydrogen to flow in the venting device and to be released into the atmosphere;
   - a water pipe having an outlet equipped with an injector which opens in the venting device, for conducting water to the venting device and injecting it into the hydrogen flow in said venting device.

By injecting water in the hydrogen flowing in the venting device, the invention allows reducing the flammability of hydrogen when it gets in contact with oxygen from the atmosphere. The water can typically be sprayed in the venting device to ensure better mixing with the hydrogen.

According to the invention, the venting line and the supply line are preferably fully separated, except at their inlets which are both connected to the hydrogen tank, for example by means of a valve (such as said control valve). More generally, the venting circuit as a whole (venting line and venting device) can be distinct from the energy producing circuit as a whole (energy producing equipment and supply line).

In an embodiment, the venting device outlet opens directly into the atmosphere, the hydrogen to be released not flowing downstream from said outlet through any valve, any other component, or any line. Preferably, there is not provided any component downstream from said outlet, except possibly a protecting element for preventing clogging, water entry, insect entry, etc. to ensure the outlet will work when the time comes.

It should be noted that the terms "energy producing equipment" is used for simplicity purposes, but actually refers to an equipment that converts chemical energy from the hydrogen into electric energy or mechanical energy. The same applies to the terms "hydrogen-based energy production system".

The hydrogen-based energy production system may further comprise a water reservoir to which the water pipe inlet is connected. The water reservoir can receive water from a fuel cell device - or any other system producing water - or can be a reservoir that needs to be filled by the user.

The water reservoir can be pressurized by hydrogen carried by a pressurizing line which is in fluid communication with the compressed hydrogen tank, at least when the control valve is open.

Preferably, the pressurizing line is in fluid communication with the compressed hydrogen tank only when the control valve is open, i.e. when hydrogen has to be released into the atmosphere, i.e. only when water injection is required. Indeed, the rest of the time, pressurizing the water in the reservoir is not required and would unnecessarily entail energy consumption. Furthermore, having a permanently pressurized water reservoir would make water collection more complicated.

It has to be noted that the pressurizing line is not necessarily directly connected to the hydrogen tank.

According to an embodiment, the pressurizing line inlet is connected to the venting device, upstream from the injector. According to another embodiment, the pressurizing line branches from the venting line. In both cases, there can be provided a pressure regulator for limiting the pressure in the water reservoir.

The venting device can comprise, from an inlet to an outlet thereof: a collector, an expansion portion, a mixing portion, and a vent. The pressurizing line inlet can be connected to the collector; the injector can open in or be housed in the expansion portion. Besides, the venting device can comprise a mixer housed in the mixing portion, for promoting mixing between hydrogen and water.

The system may further comprise a temperature actuated pressure release system which is coupled to the hydrogen tank and to the control valve.

Thus, the predetermined operating conditions in which the control valve is open can correspond to the temperature in the hydrogen tank being above a predetermined temperature. Alternatively, said predetermined operating conditions can correspond to the pressure in the hydrogen tank being above a predetermined pressure.

The venting line inlet may be connected to the hydrogen tank only through the control valve, but not through any other component or line.

The control valve can further control the hydrogen flow in the supply line, preferably not as a function of temperature.

According to another aspect, the invention relates to a hydrogen-based energy production system which comprises a hydrogen storage system as previously described, and which further comprises an energy producing equipment. This equipment can comprise a fuel cell device which is connected to the hydrogen tank by the supply line and which can produce electricity from the reaction between hydrogen and oxygen.

Electricity can be used to run an electric motor of a vehicle, either as the sole component that can provide mechanical energy to the vehicle, or in addition to an internal combustion engine. Electricity can be stored in an energy storage device such as a battery or a set of batteries, to be used subsequently when needed.

Alternatively, hydrogen could be directly burnt in an internal combustion engine which would then form the energy producing equipment.

The system may comprise a system for recovering water produced by the fuel cell device and for directing said water to the water pipe. Another water source could alternatively be used, such as the water originating from an air conditioning system.

According to still another aspect, the invention relates to a vehicle comprising a hydrogen storage system or a hydrogen-based energy production system as previously described.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic drawing of a vehicle comprising a hydrogen-based energy production system according to the invention;
Fig. 2 is a schematic drawing of a hydrogen-based energy production system according to an embodiment of the invention;
Fig. 3 is a schematic drawing of a hydrogen-based energy production system according to another embodiment of the invention.

### DETAILED DESCRIPTION OF EXAMPLE EMBODIMENTS OF THE INVENTION

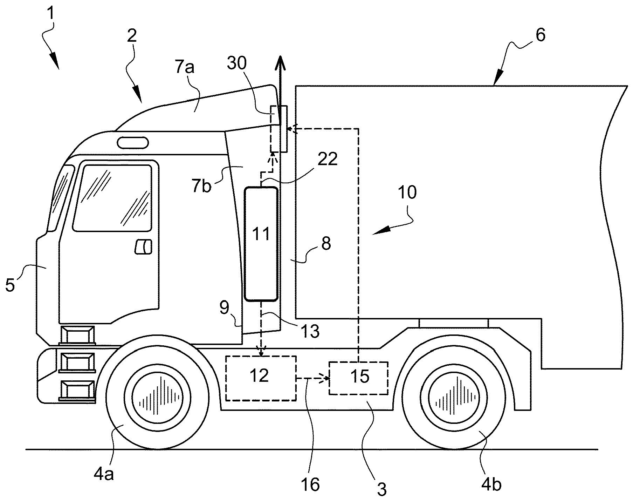

Figure 1 shows a vehicle 1, more specifically an industrial vehicle. Although the invention will be described with respect to a truck, the invention is not restricted to this particular vehicle, but may also be used in other vehicles, such as a bus.

The vehicle 1 may comprise a tractor 2 including a chassis 3 supported by front wheels 4a and rear wheels 4b and a cab 5 which can be mounted on the chassis 2 through suspensions. The chassis 3 may include at least one longitudinal beam (not shown). The vehicle 1 may further comprise a trailer 6 connected to the tractor 2.

The cab 5 can be equipped with an aerodynamic system including a top member 7a arranged on the cab roof and side members 7b. Each side member 7b extends from a cab rear side edge towards the rear, and is preferably substantially level with the corresponding cab side wall. The side members 7b extend on both sides of the gap 8 formed between the cab rear wall 9 and the trailer front wall.

According to the invention, the vehicle 1 comprises a hydrogen-based energy production system 10 which includes a hydrogen storage system.

The hydrogen-based energy production system 10 comprises at least one compressed hydrogen tank 11 that provides hydrogen, as a fuel, to an energy producing equipment 12, through a supply line 13.

In the illustrated embodiment, the energy producing equipment comprises a fuel cell device 12 which can produce electricity from the reaction between hydrogen from the tank 11 and oxygen from the atmosphere. The fuel cell device 12 is electrically connected to a device 14 which can make use of the electricity produced, such as an electric motor, or which can stored said electricity for future needs, such as a battery.

The fuel cell device 12 also produces water, generally in liquid form, which is recovered for the purpose that will be explained hereinafter. Said water collection may be gravitational or forced by a pump (not shown).

The system for recovering water comprises a water reservoir 15 which is connected to the fuel cell device 12 by a recovery line 16. This collection may be gravitational or forced by a pump.

The water coming out of the fuel cell device 12 may flow in the recovery line 16 through several components before being introduced in the water reservoir 15. Thus, the recovery line 16 may comprise a water separator 17 which allows separating water and gas from the fuel cell device exhaust, typically by swirl or passive centrifugation. Moreover, a check valve 18 is preferably placed between the water separator 17 and the water reservoir 15 to prevent reverse flow, especially when the water reservoir 15 is pressurized.

The water reservoir 15 may further include one or more of the following: a water level sensor; a device to avoid development of bacteria and fungi (typically ultraviolet based); a drain 19 including a drain valve used to purge the water, to manage continuous renewal of the water and/or to maintain the desired water level.

The hydrogen-based energy production system 10 further includes a safety device 20 comprising a venting device 30 which opens into the atmosphere and which is connected to the hydrogen tank 11 by a venting line 22.

The inlet of the venting line 22 may be connected to the hydrogen tank 11 through a control valve 24 which is coupled to a temperature actuated pressure release system 23. In an embodiment, the temperature actuated pressure release system 23 is integrated in the control valve 24.

The inlet of the supply line 13 may also be connected to the hydrogen tank 11 through the control valve 24, to allow controlling the hydrogen flow provided to the fuel cell device 12.

The outlet of the venting line 22 is connected to the inlet 31 of the venting device 30. From its inlet 31 to its outlet 32, the venting device 30 comprises:
- a collector 33 for collecting hydrogen from the hydrogen tank 11;
- an expansion portion 34, which can be shaped as a divergent cone;
- a mixing portion 35;
- and a vent 36, such as a nozzle or a sprinkler. The vent 36 may be equipped with appropriate devices for ensuring a safe opening anytime, for example by avoiding clogging.

As schematically shown in figure 1, the venting device 30 is arranged to be substantially vertical when installed on the vehicle 1. The water reservoir 15 and fuel cell device 12 can be fastened to the vehicle chassis 3, for example on one of the longitudinal beams. The hydrogen tank 11, for example in the form of several cylinders, can be secured to the cab rear wall 9, and the venting device 30 may be located above the hydrogen tank 11. Both the hydrogen tank 11 and venting device 30 may be arranged in the gap 8 formed between the cab rear wall 9 and the trailer front wall.

The control valve 24 is designed to be open in predetermined operating conditions to allow hydrogen to flow in the venting device 30 and to be released into the atmosphere. More specifically, the control valve 24 can be designed to be open when the temperature in the hydrogen tank 11 is above a predetermined temperature, for example above 300°C. This can typically occur in case of an accident of the vehicle 1. In concrete terms, the temperature in the hydrogen tank 11 can be monitored by a temperature sensor 25 coupled to the temperature actuated pressure release system 23, said system 23 being in turn coupled to the control valve 24, to allow some of the hydrogen to be released into the atmosphere. Thus, the pressure release is managed by the temperature actuated pressure release system 23 in order to ensure that the hydrogen tank 11 will not burst.

In case the hydrogen tank 11 comprises several hydrogen cylinders, each cylinder may be equipped with a dedicated temperature actuated pressure release system 23 integrated in a control valve 24.

In order to reduce the flammability of hydrogen when it is released into the atmosphere, in an embodiment, the invention makes use of the water recovered from the fuel cell device 12. This water is stored in the water reservoir 15 for that purpose, i.e. by anticipation of such a situation, for example resulting from an accidental fire. When required, this water is then conducted to the venting device 30, and injected in said venting device 30, into the hydrogen flow F1.

The hydrogen-based energy production system 10 comprises a water pipe 40 having:
- an inlet connected to the water reservoir 15, preferably through a filter 26;
- an outlet equipped with an injector 41 which opens in the venting device 30 to inject a flow F2 of water. For example, the injector 41 may be configured to spray water in the form of droplets.

In an embodiment, the injector 41 opens in or is housed in the expansion portion 34 of the venting device 30, preferably near the base of said expansion portion 34

The water reservoir 15 is pressurized by the released hydrogen when the control valve 24 is open. More precisely, the water reservoir 15 is pressurized by hydrogen carried by a pressurizing line 27 which is in fluid communication with the compressed hydrogen tank 11 when the control valve 24 is open. The pressurizing line 27 opens in the water reservoir 15. A pressure regulator 28 is provided on the pressurizing line 27 to limit the pressure level in the water reservoir 15.

Thus, when necessary, the control valve 24 allows hydrogen to flow out of the hydrogen tank 11 towards the venting device 30. Part of this released hydrogen is used to pressurize the water reservoir 15 through the pressurizing line 27, and a flow F1 of hydrogen from the hydrogen tank 11 enters the venting device 30 through the venting line 22.

Water of the pressurized water reservoir 15 is thus conducted to the injector 41 and forms a water flow F2 that mixes with the hydrogen flow F1. For promoting mixing between hydrogen and water, the venting device 30 may comprise a mixer 37 housed in the mixing portion 35. The mixer 37 can have a set of blades or other deviating walls or flow-influencing members. The mixer 37 is preferably located downstream of the injector 41.

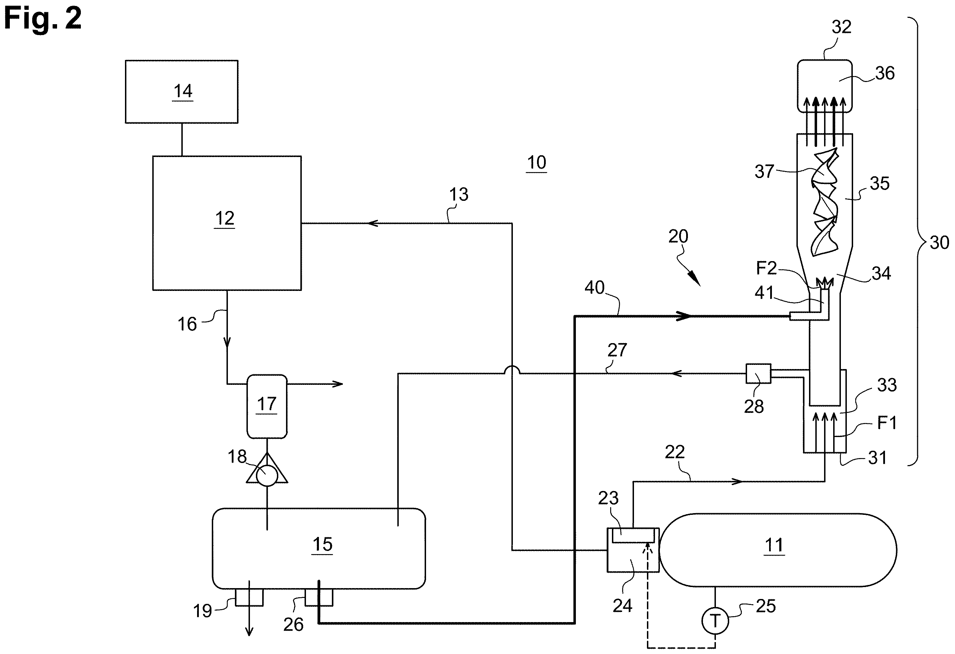

According to an embodiment, shown in figure 2, the pressurizing line inlet is connected to the venting device 30, upstream from the injector 41, and downstream from the venting device inlet 31. For example, the pressurizing line inlet is connected to the collector 33, i.e. at the lower portion of the venting device 30. The pressure regulator 28 can be located near the pressurizing line inlet, downstream from the venting device 30.

Such an arrangement may enable a right-sized pressure difference between water at injector 41 and hydrogen in the area of the injector 41, only by design of the geometry of the system.

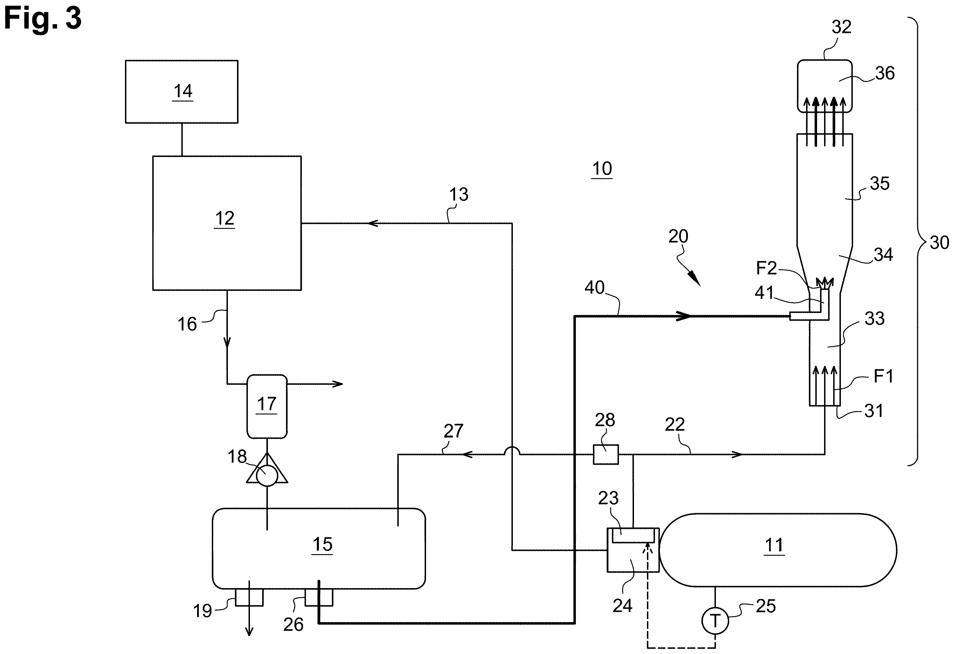

According to another embodiment, shown in figure 3, the pressurizing line 27 branches from the venting line 22. The pressure regulator 28 can be located near the pressurizing line inlet.

Such an arrangement may enable higher injection pressures to obtain minimal size of water droplets to optimize the effect of water injection. It may also provide more flexibility in vehicle integration.

It is to be understood that the present invention is not limited to the embodiments described above and illustrated in the drawings; rather, the skilled person will recognize that many changes and modifications may be made within the scope of the appended claims.

## Claims

1. A hydrogen storage system, comprising:
- at least one compressed hydrogen tank (11);
- a supply line (13) for supplying hydrogen from said hydrogen tank (11) to an energy producing equipment (12);
- a safety device (20) comprising:
- a venting device (30) opening into the atmosphere;
- a venting line (22) connecting the hydrogen tank (11) to the venting device (30), the venting line (22) being equipped with a control valve (24) designed to be open in predetermined operating conditions to allow hydrogen to flow in the venting device (30) and to be released into the atmosphere;
- a water pipe (40) having an outlet equipped with an injector (41) which opens in the venting device (30), for conducting water to the venting device (30) and injecting it into the hydrogen flow (F1) in said venting device (30).

2. The system according to claim 1, **characterized in that** it further comprises a water reservoir (15) to which the water pipe inlet is connected.

3. The system according to claim 2, **characterized in that** the water reservoir (15) is pressurized by hydrogen carried by a pressurizing line (27) which is in fluid communication with the compressed hydrogen tank (11), at least when the control valve (24) is open.

4. The system according to claim 3, **characterized in that** the pressurizing line inlet is connected to the venting device (30), upstream from the injector (41).

5. The system according to claim 3, **characterized in that** the pressurizing line (27) branches from the venting line (22).

6. The system according to any one of claims 1 to 5, **characterized in that** the venting device (30) comprises, from an inlet (31) to an outlet thereof (32): a collector (33), an expansion portion (34), a mixing portion (35), and a vent (36).

7. The system according to claims 4 and 6, **characterized in that** the pressurizing line inlet is connected to the collector (33).

8. The system according to claim 6 or 7, **characterized in that** the injector (41) opens in or is housed in the expansion portion (34).

9. The system according to any one of claims 6 to 8, **characterized in that** venting device (30) comprises a mixer (37) housed in the mixing portion (35), for promoting mixing between hydrogen and water.

10. The system according to any one of claims 1 to 9, **characterized in that** it further comprises a temperature actuated pressure release system (23) which is coupled to the hydrogen tank (11) and to the control valve (24).

11. A hydrogen-based energy production system (10), comprising a hydrogen storage system according to any one of the preceding claims, and further comprising an energy producing equipment (12), said equipment comprising a fuel cell device which is connected to the hydrogen tank (11) by the supply line (13) and which can produce electricity from the reaction between hydrogen and oxygen.

12. The hydrogen-based energy production system according to claim 11, **characterized in that** it comprises a system (15-18) for recovering water produced by the fuel cell device (12) and for directing said water to the water pipe (40).

13. A vehicle (1) comprising a hydrogen storage system according to any one of claims 1 to 10 or a hydrogen-based energy production system (10) according to any one of claims 11 and 12.
